# FASCICULE DE BREVET EUROPEEN

(11) **EP 2 815 212 B1**
(45) Date de publication et mention de la délivrance du brevet: **02.01.2019**
(21) Numéro de dépôt: 13710454.3
(22) Date de dépôt: 14.02.2013
(51) Int. Cl.: G01D 5/14

(54) **CAPTEUR COMPRENANT UN AIMANT ET UNE SONDE A EFFET HALL**
SENSOR MIT EINEM MAGNETEN UND EINER HALLEFFEKTSONDE
SENSOR COMPRISING A MAGNET AND A HALL-EFFECT PROBE

(30) Priorité: 16.02.2012 FR 1251433
(43) Date de publication de la demande: 24.12.2014
(73) Titulaire: SC2N, 94046 Creteil Cedex (FR)
(72) Inventeur: GUIBET, Vincent, F-14400 Vaucelles (FR)
(74) Mandataire: Garcia, Christine
(86) Numéro de dépôt international: PCT/FR2013/050303
(87) Numéro de publication internationale: WO 2013/121153

(56) Documents cités:
- FR-A1- 2 724 723
- JP-A- 58 045 501
- US-A- 5 637 995
- US-A1- 2002 011 837

## Description

La présente invention concerne un capteur comprenant un aimant et une sonde à effet Hall et destiné à détecter si un objet mobile métallique est devant la sonde à effet Hall, ainsi qu'un aimant pour un tel capteur.

Pour vérifier la présence d'un objet métallique mobile, il est connu d'utiliser un capteur comprenant un aimant couplé à une sonde à effet Hall.

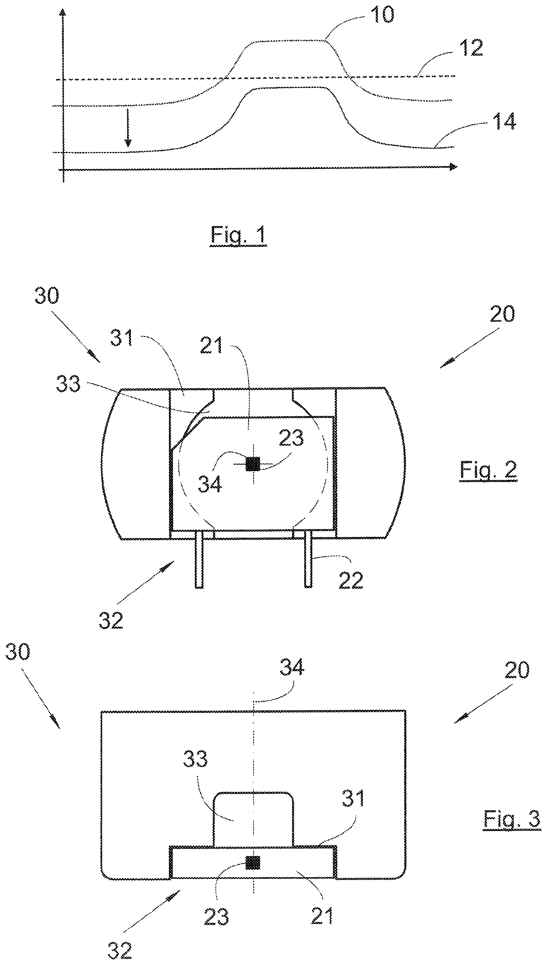

Un tel capteur est utilisé par exemple pour détecter la position de l'axe du crabot d'une boîte de vitesse, ou encore la position de l'arbre à came(s). La Fig. 1 montre une courbe 10 qui représente les variations de l'induction magnétique en fonction de la position de l'objet mobile par rapport à la sonde à effet Hall. La valeur de l'induction magnétique diminue lorsque l'objet mobile s'éloigne de la sonde à effet Hall.

Actuellement, les constructeurs, en particulier automobiles, demandent que la position de l'objet mobile par rapport à la sonde à effet Hall soit déterminée dès le démarrage du capteur. Cette fonction est appelée TPO (en Anglais: True Power ON).

Cette fonction permet ainsi de déterminer au démarrage, si l'objet mobile est en vis-à-vis de la sonde à effet Hall ou non. Pour ce faire, une valeur seuil 12 de l'induction magnétique est réglée en usine.

Ainsi, lors du démarrage du capteur, si la valeur de l'induction magnétique vue par la sonde à effet Hall est supérieure à la valeur seuil 12, cela est interprété comme le fait que l'objet mobile est en vis-à-vis de la sonde à effet Hall. *A contrario,* si lors du démarrage du capteur, la valeur de l'induction magnétique vue par la sonde à effet Hall est inférieure à la valeur seuil 12, cela est interprété comme le fait que l'objet mobile n'est pas en vis-à-vis de la sonde à effet Hall.

Au cours de la vie du capteur, il peut arriver que la sonde à effet Hall se déplace par rapport à l'aimant et alors la valeur de l'induction magnétique change. La courbe 14 est la courbe représentative des variations de l'induction magnétique après déplacement de la sonde à effet Hall.

Comme cela est visible sur la Fig. 1, la valeur seuil 12 n'est plus atteinte après le déplacement de la sonde à effet Hall et la fonction TPO n'est alors plus remplie.

Pour résoudre ce problème, il est connu de fixer la sonde à effet Hall dans le capteur et donc de rendre la sonde à effet Hall immobile par rapport à l'aimant. La fixation est réalisée par exemple par coulage d'une résine dans le capteur en englobant la sonde à effet Hall.

Une telle solution présente d'autres désavantages. Par exemple, la fixation de la sonde à effet Hall entraîne l'apparition de contraintes mécaniques dues aux dilatations thermiques dans la sonde à effet Hall et en particulier au niveau des soudures. En outre, la mise en place de résine est onéreuse et nécessite l'utilisation d'une machine appropriée.

On connaît du document US 5 637 995, un capteur constitué d'une sonde comportant un élément sensible, d'un aimant permanent, d'un boîtier et d'un capuchon. L'aimant permanent présente une cavité et un trou traversant s'étendant le long de l'axe central de l'aimant permanent. Le trou traversant communique avec la cavité. La sonde s'étend le long du trou traversant et dans la cavité, l'élément sensible étant logé au niveau de la cavité. L'aimant permanent et la sonde sont maintenus en place par le boîtier et le capuchon. La sonde est maintenue en place dans l'aimant afin de venir en permanence au contact du capuchon.

Le document US2002/0011837 décrit également un capteur selon l'état de la technique.

Un objet de la présente invention est de proposer un capteur comprenant un aimant et une sonde à effet Hall qui ne présentent pas les inconvénients de l'art antérieur.

A cet effet, est proposé un capteur comportant:
- une sonde à effet Hall comportant un élément sensible,
- un aimant présentant une cavité présentant un fond et dans laquelle loge l'élément sensible, et un trou cylindrique ayant un axe et qui s'étend à partir dudit fond vers l'intérieur de l'aimant,
la sonde à effet Hall étant susceptible de se déplacer à l'intérieur de la cavité.

Le trou cylindrique permet d'abaisser l'induction magnétique, notamment de manière à ce que cette dernière atteigne une valeur d'environ zéro Gauss au niveau de l'élément sensible de la sonde à effet Hall.
Le trou cylindrique peut présenter une section transversale circulaire.

Le fond de la cavité peut définir un plan transversal, notamment perpendiculaire à l'axe du trou cylindrique.

La sonde à effet Hall peut être logée dans la cavité.

Ce plan peut former une butée pour le déplacement selon l'axe du trou cylindrique de la sonde à effet Hall.

Autrement dit, le déplacement de la sonde à effet Hall à l'intérieur de la cavité peut n'impliquer aucun déplacement de celle-ci à l'intérieur du trou cylindrique.

Au cours de son déplacement à l'intérieur de la cavité, la sonde peut rester hors du trou. La dimension, mesurée perpendiculairement à l'axe du trou cylindrique de la sonde est notamment supérieure à la dimension du trou cylindrique, perpendiculairement à l'axe du trou cylindrique.

Le déplacement de la sonde peut s'effectuer exclusivement à l'extérieur du trou.

Avantageusement, la sonde à effet Hall ne loge pas, même partiellement, dans le trou cylindrique.

Avantageusement, le trou cylindrique est borgne, c'est-à-dire que seule une des extrémités du trou le long de son axe est ouverte, l'autre étant fermée.

La cavité peut déboucher à l'extérieur de l'aimant par deux ouvertures disposées parallèlement à l'axe du trou. Ces ouvertures peuvent ou non également être ménagées dans le trou.

Le trou cylindrique peut déboucher à l'extérieur de l'aimant par deux ouvertures disposées parallèlement à l'axe dudit trou.

Grâce à ces ouvertures, l'existence de parois fines de l'aimant disposées parallèlement à l'axe du trou et autour dudit trou peut être évitée.

Les ouvertures peuvent être diamétralement opposées selon l'axe du trou.

Dans un exemple de mise en oeuvre de l'invention, le trou est borgne et débouche à l'extérieur de l'aimant par deux ouvertures disposées parallèlement à l'axe dudit trou. Autrement dit, selon cet exemple de mise en oeuvre de l'invention, une des extrémités du trou selon son axe est fermée et deux ouvertures sont ménagées de part et d'autre dudit axe, les ouvertures étant notamment diamétralement opposées.

Avantageusement, les dimensions de l'aimant sont telles que lors des déplacements de la sonde à effet Hall, la valeur de l'induction magnétique perçue par l'élément sensible reste sensiblement constante.

Les dimensions de l'aimant sont notamment telles que les variations de l'induction magnétique perçues par l'élément sensible lors des déplacements de la sonde à effet Hall ne sont pas susceptibles de déplacer la courbe représentative du champ magnétique par rapport à la valeur seuil correspondant au TPO. La fonction TPO reste donc opérationnelle.

En d'autres termes, les dimensions de l'aimant peuvent être telles que, dans l'intervalle de tolérance des déplacements de la sonde à effet Hall, la valeur de l'induction magnétique perçue par l'élément sensible reste sensiblement constante.

Ainsi, il n'est alors pas nécessaire de fixer la sonde à effet Hall avec de la résine et il n'y a donc pas d'apparition de contraintes mécaniques sur la sonde à effet Hall et la fonction TPO reste opérationnelle.

La cavité peut avoir une forme parallélépipédique. La sonde peut alors avoir une forme lui permettant d'être reçue dans la cavité.

Le capteur peut comprendre un support et la sonde à effet Hall peut être fixée à ce support, par exemple uniquement par l'intermédiaire de pattes de connexion.

Ces pattes peuvent être flexibles et cette flexibilité des pattes de connexion de la sonde peut permettre à la sonde de se déplacer dans la cavité.

L'aimant et la sonde à effet Hall peuvent chacun être reliés, directement ou non, à un même support. L'aimant et la sonde à effet Hall peuvent être chacun solidaires de ce même support. Le support peut être un boîtier du capteur.

L'aimant et la sonde à effet Hall peuvent ne pas être rigidement couplés entre eux, contrairement à ce qui serait le cas si une résine était utilisée pour immobiliser l'aimant par rapport à la sonde à effet Hall.

L'aimant et la sonde à effet Hall peuvent ainsi être tous deux reliés à un même support sans que l'aimant et la sonde à effet Hall ne soient rigidement couplés entre eux.

La sonde à effet Hall peut se déplacer dans la cavité selon une direction parallèle à l'axe du trou et/ou dans un plan perpendiculaire audit axe.

L'invention propose également un aimant pour un capteur selon l'un des modes de réalisation précédents, ledit aimant présentant une cavité présentant un fond et destinée à loger un élément sensible d'une sonde à effet Hall, et un trou cylindrique ayant un axe et qui s'étend à partir dudit fond vers l'intérieur de l'aimant.

Avantageusement, le trou cylindrique est borgne.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une courbe des variations d'un champ magnétique d'un capteur de l'état de la technique,
la Fig. 2 montre un capteur selon l'invention en vue dite de face,
la Fig. 3 montre le capteur de Fig. 2 en vue de dessus,
la Fig. 4 montre un aimant pour le capteur de la Fig. 2 en vue de face,
la Fig. 5 montre l'aimant de la Fig. 4 en vue de côté, et
la Fig. 6 montre une courbe du champ magnétique pour un capteur selon l'invention.

La Fig. 2 montre un capteur 20 selon l'invention en vue de face et la Fig. 3 montre le capteur 20 en vue de dessus. Le capteur 20 comprend un aimant 30 et une sonde à effet hall 21.

Le capteur 20 comporte également une base non représentée sur laquelle l'aimant 30 est fixé. La sonde à effet Hall 21 comporte un élément sensible 23 et elle est fixée sur un circuit imprimé (non représenté) ou sur des languettes par l'intermédiaire de ses pattes de connexion 22. Le circuit imprimé est lui-même fixé sur la base qui peut former un boîtier de protection dans lequel sont logés l'aimant 30, la sonde à effet Hall 21 et le circuit imprimé.

L'aimant 30 présente une cavité 32 ouverte ayant un fond 31 et dans laquelle se loge la sonde à effet Hall 21 et plus particulièrement l'élément sensible 23.

La cavité 32 prend dans l'exemple décrit la forme d'un parallélépipède qui est limité par le fond 31 et qui est ouvert sur la face opposée au fond 31. Le parallélépipède est limité par l'aimant 30, le long de deux de ses autres faces parallèles, et il est ouvert le long des deux dernières faces parallèles.

La sonde à effet Hall 21 est enfoncée dans la cavité 32. Une partie de l'aimant 30 est en vis-à-vis de deux des bords parallèles de la sonde à effet Hall 21.

L'aimant 30 présente également un trou cylindrique 33 ayant un axe 34 et qui s'étend à partir du fond 31 vers l'intérieur de l'aimant 30. L'axe 34 est perpendiculaire au fond 31 c'est-à-dire au plan dans lequel s'étend la sonde à effet Hall 21.

Le trou cylindrique 33 est borgne. Les dimensions du trou 33 peuvent dépendre des dimensions de l'aimant 30, notamment de sa dimension le long de l'axe 34 et de celles dans un plan perpendiculaire à cet axe 34, et/ou des dimensions de la cavité 32.

L'aimant 30 est globalement symétrique par rapport à l'un des plans passant par l'axe 34.

La position préférentielle de l'élément sensible 23, lorsque le capteur 20 est assemblé, est telle que l'élément sensible 23 est logé dans la cavité 32 et se positionne sur l'axe 34.

La sonde à effet Hall 21 n'est pas fixée par l'intermédiaire d'une résine. Dans l'exemple décrit, elle est uniquement fixée par l'intermédiaire de ses pattes de connexion 22 qui sortent de la cavité 32 par l'une des deux dernières faces ouvertes du parallélépipède. La sonde à effet Hall 21 est donc susceptible de se déplacer par rapport à l'aimant 30 dans un intervalle de tolérance autour de la position préférentielle. L'intervalle de tolérance est défini par les tolérances de fabrication des composants, les tolérances de montage des composants entre eux et les déplacements qui s'opèrent au cours de la vie du capteur 20.

L'élément sensible 23 est ainsi susceptible de se déplacer dans la cavité 32 selon une première direction parallèle à l'axe 34 et dans un plan parallèle au fond 31 autour de l'axe 34. La longueur du fond 31 est notamment déterminée pour permettre l'introduction de la sonde à effet Hall 21 et limiter les déplacements de la sonde à effet Hall 21 dans la cavité 32.

Les dimensions de l'aimant 30 sont telles que les variations de l'induction magnétique perçues par l'élément sensible 23 lors des déplacements de la sonde à effet Hall 21 ne sont pas susceptibles de déplacer la courbe représentative du champ magnétique par rapport à la valeur seuil correspondant au TPO. La fonction TPO reste donc opérationnelle.

En d'autres termes, les dimensions de l'aimant 30 sont telles que, dans l'intervalle de tolérance des déplacements de la sonde à effet Hall 21, la valeur de l'induction magnétique perçue par l'élément sensible 23 reste sensiblement constante.

Ainsi, il n'est pas nécessaire de fixer la sonde à effet Hall 21 avec de la résine et il n'y a donc pas d'apparition de contraintes mécaniques sur la sonde à effet Hall 21 et la fonction TPO reste opérationnelle.

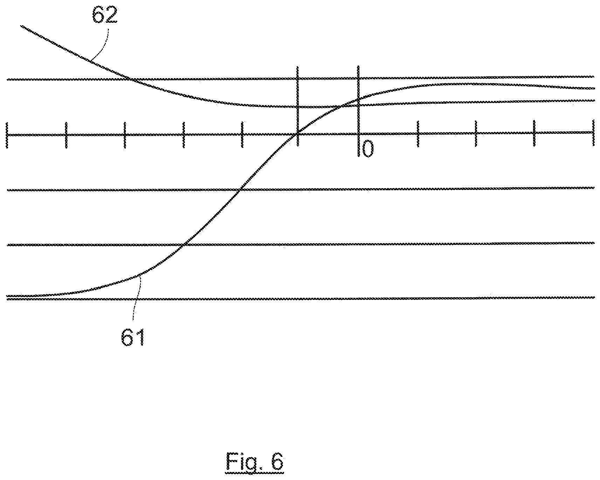

La Fig. 6 est un graphe montrant l'induction magnétique perçue par l'élément sensible 23 en fonction de la position de l'élément sensible 23 le long de l'axe 34.

Le zéro de l'axe des abscisses correspond à la position théorique de l'élément sensible 23 telle qu'elle a été définie lors de la conception du capteur 20, c'est-à-dire lorsque l'élément sensible 23 est sur l'axe 34 et lorsque la sonde à effet Hall 21 est dans le fond de la cavité 32. Chaque division de l'axe des abscisses correspond à 0,5 mm. Du fait de son déplacement possible tout en restant dans l'intervalle de tolérance, la position réelle de la sonde à effet Hall 21 varie de 0 mm (position au fond de la cavité 32) à -0,5 mm (position décollée du fond de la cavité 32).

Le zéro de l'axe des ordonnées correspond à 0 G. Chaque division de l'axe des ordonnées correspond à 500 G.

La courbe 61 correspond à l'induction magnétique perçue par l'élément sensible d'une sonde à effet Hall d'un capteur de l'état de la technique.

La courbe 62 correspond à l'induction magnétique perçue par l'élément sensible 23 de la sonde à effet Hall 21 du capteur 20 selon l'invention.

Dans le cas du capteur de l'état de la technique, la variation de l'induction magnétique dans l'intervalle de déplacement de l'élément sensible est d'environ 300 G.

Dans le cas du capteur 30 selon l'invention, la variation de l'induction magnétique dans l'intervalle de déplacement de l'élément sensible 23 est de l'ordre de 10 G.

L'aimant 30 est par exemple obtenu par moulage. En variante, l'aimant est un aimant compressé, fritté ou usiné.

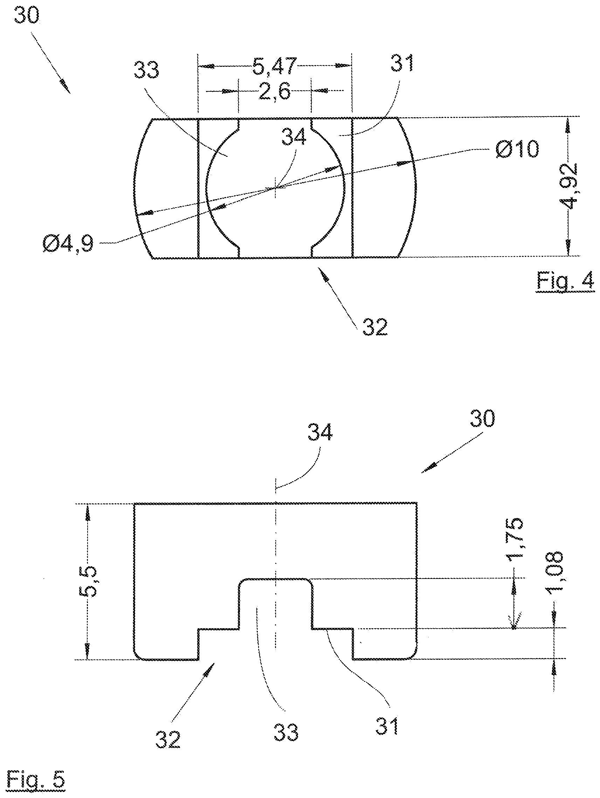

La Fig. 4 et la Fig. 5 montrent un mode de réalisation particulier de l'aimant 30 en vue de face et en vue de dessus dans le cas où la sonde à effet Hall 21 est une sonde de la société INFINEON et référencée TLE 498x.

L'aimant 30 est constitué d'un bloc de hauteur (mesurée le long de l'axe 34) de 5,5 mm. Le bloc est une portion d'un cylindre de diamètre 10 mm centré sur l'axe 34. Le cylindre est limité par deux plans parallèles et symétriques par rapport à l'axe 34. La distance entre les deux plans est de 4,92 mm.

La cavité 32 possède une forme rectangulaire centrée sur l'axe 34 et perpendiculaire aux plans limitant le cylindre. La longueur du fond 31 parallèlement aux plans est de 5,47 mm et la largeur du fond 31 perpendiculairement aux plans est de 4,92 mm. La hauteur de la cavité 32 parallèlement à l'axe 34 est de 1,08 mm.

Le trou cylindrique 33 présente un diamètre de 4,9 mm et une hauteur (mesurée le long de l'axe 34) par rapport au fond 31 de 1,75 mm. La paroi limitant le trou cylindrique 33 débouche dans l'exemple considéré sur chacun des plans limitant le cylindre par une fente perpendiculaire audit plan et ayant une largeur de 2,6 mm répartie symétriquement de part et d'autre de l'axe 34.

Bien entendu, la présente invention n'est pas limitée aux exemples et modes de réalisation décrits et représentés, mais elle est susceptible de nombreuses variantes accessibles à l'homme de l'art.

## Revendications

1. Capteur (20) comportant:
- une sonde à effet Hall (21) comportant un élément sensible (23),
- un aimant (30) présentant une cavité (32) présentant un fond (31) et dans laquelle loge l'élément sensible (23), et un trou cylindrique (33) ayant un axe (34) et qui s'étend à partir dudit fond (31) vers l'intérieur de l'aimant (30),
la sonde à effet Hall étant susceptible de se déplacer à l'intérieur de la cavité (32) et à l'extérieur du trou (33),
**caractérisé en ce que** les dimensions de l'aimant (30) sont telles que lors des déplacements de la sonde à effet Hall (21), la valeur de l'induction magnétique perçue par l'élément sensible (23) reste sensiblement constante.

2. Capteur (20) selon la revendication 1, le trou cylindrique (33) présentant une section transversale circulaire.

3. Capteur (20) selon la revendication 1 ou 2, le fond de la cavité (32) définissant un plan transversal, notamment perpendiculaire à l'axe du trou cylindrique (33).

4. Capteur (20) selon la revendication 3, le plan transversal formant une butée pour le déplacement selon l'axe du trou cylindrique (33) de la sonde à effet Hall (21).

5. Capteur (20) selon l'une des revendications précédentes, le trou cylindrique (33) étant borgne.

6. Capteur (20) selon l'une quelconque des revendications précédentes, la cavité (32) ayant une forme parallélépipédique.

7. Capteur (20) selon l'une quelconque des revendications précédentes, l'aimant (30) et la sonde à effet Hall (21) n'étant pas rigidement couplés

8. Capteur (20) selon l'une quelconque des revendications précédentes, la sonde à effet Hall (21) pouvant se déplacer selon une direction parallèle à l'axe (34) du trou (33) et/ou dans un plan perpendiculaire audit axe (34).

9. Capteur (20) selon la revendication 8, la sonde à effet Hall (21) se déplaçant exclusivement dans des plans perpendiculaires audit axe (34)

10. Capteur selon l'une quelconque des revendications précédentes, comportant un support et l'aimant (30) et la sonde à effet Hall (21) étant chacun reliés à ce support.

## Patentansprüche

1. Sensor (20), umfassend:
- eine Hall-Effekt-Sonde (21), umfassend ein empfindliches Element (23),
- einen Magneten (30), der eine Kavität (32) aufweist, die einen Boden (31) aufweist und in der das sensible Element (23) aufgenommen ist, und ein zylindrisches Loch (33), das eine Achse (34) hat und das sich ausgehend von dem Boden (31) zum Inneren des Magneten (30) hin erstreckt, wobei die Hall-Effekt-Sonde innerhalb der Kavität (32) und außerhalb des Lochs (33) bewegbar ist, **dadurch gekennzeichnet, dass** die Abmessungen des Magneten (30) derart sind, dass bei Bewegungen der Hall-Effekt-Sonde (21) der Wert der magnetischen Induktivität, der vom sensiblen Element (23) wahrgenommen wird, im Wesentlichen konstant bleibt.

2. Sensor (20) nach Anspruch 1, wobei das zylindrische Loch (33) einen kreisförmigen Querschnitt aufweist.

3. Sensor (20) nach Anspruch 1 oder 2, wobei der Boden der Kavität (32) eine Querebene definiert, insbesondere senkrecht zur Achse des zylindrischen Lochs (33).

4. Sensor (20) nach Anspruch 3, wobei die Querebene einen Anschlag für die Bewegung der Hall-Effekt-Sonde (21) entlang der Achse des zylindrischen Lochs (33) bildet.

5. Sensor (20) nach einem der vorhergehenden Ansprüche, wobei das zylindrische Loch (33) ein Sackloch ist.

6. Sensor (20) nach einem der vorhergehenden Ansprüche, wobei die Kavität (32) eine parallelepipedische Form hat.

7. Sensor (20) nach einem der vorhergehenden Ansprüche, wobei der Magnet (30) und die Hall-Effekt-Sonde (21) nicht starr gekoppelt sind.

8. Sensor (20) nach einem der vorhergehenden Ansprüche, wobei sich die Hall-Effekt-Sonde (21) entlang einer Richtung parallel zur Achse (34) des Lochs (33) und/oder in einer Ebene senkrecht zu der Achse (34) bewegen kann.

9. Sensor (20) nach Anspruch 8, wobei sich die Hall-Effekt-Sonde (21) ausschließlich in Ebenen senkrecht zu der Achse (34) bewegt.

10. Sensor nach einem der vorhergehenden Ansprüche, umfassend einen Träger, wobei der Magnet (30) und die Hall-Effekt-Sonde (21) jeweils mit diesem Träger verbunden sind.

## Claims

1. Sensor (20) including:
- a Hall-effect probe (21) including a sensitive element (23),
- a magnet (30) having a recess (32) having a bottom (31) and wherein the sensitive element (23) is housed, and a cylindrical hole (33) with an axis (34) and which runs from said bottom (31) to the inside of the magnet (30),
the Hall-effect probe being liable to move inside the recess (32) and outside the hole (33),
**characterized in that** the dimensions of the magnet (30) are such that during the movements of the Hall-effect probe (21), the value of the magnetic induction perceived by the sensitive element (23) remains substantially constant.

2. Sensor (20) according to Claim 1, the cylindrical hole (33) having a circular transverse cross section.

3. Sensor (20) according to Claim 1 or 2, the bottom of the recess (32) defining a transverse plane, in particular perpendicular to the axis of the cylindrical hole (33).

4. Sensor (20) according to Claim 3, the transverse plane forming an end stop for the movement of the Hall-effect probe (21) along the axis of the cylindrical hole (33).

5. Sensor (20) according to one of the preceding claims, the cylindrical hole (33) being blind.

6. Sensor (20) according to any one of the preceding claims, the recess (32) having a parallelepipedal shape.

7. Sensor (20) according to any one of the preceding claims, the magnet (30) and the Hall-effect probe (21) being not rigidly coupled.

8. Sensor (20) according to any one of the preceding claims, the Hall-effect probe (21) being able to move in a direction parallel with the axis (34) of the hole (33) and/or in a plane perpendicular to said axis (34).

9. Sensor (20) according to Claim 8, the Hall-effect probe (21) moving exclusively in planes perpendicular to said axis (34).

10. Sensor according to any one of the preceding claims, including a support, and the magnet (30) and the Hall-effect probe (21) being each linked to this support.
